Europäisches Patentamt

**European Patent Office**

**Office européen des brevets**

(11) Publication number: **0 124 118**
**A1**

## (12) EUROPEAN PATENT APPLICATION

(21) Application number: **84104801.0**

(22) Date of filing: **28.04.84**

(51) Int. Cl.³: **A 01 J 5/08**

(30) Priority: **29.04.83 ZA 833035**

(43) Date of publication of application: **07.11.84**
**Bulletin 84/45**

(84) Designated Contracting States: **AT BE CH DE FR GB IT LI NL SE**

(71) Applicant: **Bennett, Arthur James Risdon, 63 Greenhill Road, Greenside Johannesburg 2193 (ZA)**

(72) Inventor: **Bennett, Arthur James Risdon, 63 Greenhill Road, Greenside Johannesburg 2193 (ZA)**

(74) Representative: **UEXKÜLL & STOLBERG Patentanwälte, Beselerstrasse 4, D-2000 Hamburg 52 (DE)**

(54) **Teat cup liner for milking machines.**

(57) The invention relates to a teat cup liner for use within a teat cup shell (12) in milking machines for milking animals. It comprises an upper portion (14) for engagement with the teat (13) and a lower portion (16) between said upper portion (14) and the lower opening (20) of the teat cup shell (12). On vacuum release in the space between the teat cup shell (12) and the teat cup liner during milking the upper portion (14) is not or only slightly collapsible while the lower portion (16) is completely collapsible. The teat cup liner of the invention eliminates mechanical damage to the teat and the udder tissue.

Prio: SA 83/3035 0124118
April 29, 1983

April 27, 1984

-7-

## TEAT CUP LINER FOR MILKING MACHINES

The invention relates to teat cup liners for use within teat cup shells in milking machines for milking animals.

There are many varied shapes and sizes of liners known in the art used particularly for milking dairy cows.

The known teat cup liners are of uniform wall thickness throughout their length within the teat cup shell. During milking vacuum and normal pressure are applied alternatively to the space between the inside of the shell and the liner. Because the inside of a liner at one end is connected to a source of vacuum and the other end is sealed off by connection due to suction to the teat of the animal, the liner, being of thin rubber, collapses each time the pulsator releases the vacuum in the space between the teat cup shell and the teat cup liner. Because of the uniform thickness of the rubber liner along its total length, this collapses on the whole teat and tends to damage the secretory tissue at the base of the udder, particularly if the teat is small and the base of the udder where it joins the teat is tapered. Further, since the rubber liner is round, it does not collapse completely below the teat and consequently there is at no stage of the pulsation cycle a relief of vacuum on the teat.

The mechanical damage done to the teat and the other tissue of the animals during the milking process is a major factor in causing an udder disease known as mastitis. The losses due to this disease in South Africa alone amount to more than R 80 million annually.

It is an object of the invention to minimize and hopefully eliminate the mechanical damages done to the teat and udder tissue by conventional teat liners.

This objective is achieved by a teat cup liner according to the invention which comprises an upper portion for engagement with the teat which at vacuum release in the space between the teat cup shell and the teat cup liner during milking is not or only slightly collapsible and a lower portion located between said upper portion and the lower opening of the teat cup shell which lower portion is completely collapsible at vacuum release during milking.

Thus, in use the upper portion of the teat cup liner only partially collapses on the teat without causing undue stress on the tissue with which it is in contact but causes sufficient stress to gently massage the blood away from the skin of the teat, while the lower portion of the teat cup liner collapses completely on each vacuum release within the teat cup shell even when a lower than normal vacuum is applied to the inside of the liner from outside the shell.

Preferably the wall thickness of the upper portion of the liner of the invention is larger than the wall thickness of the lower portion and the upper portion joins the lower portion over tapered portion.

According to a preferred embodiment of the invention the upper portion of the lineaer has a circular cross section and the lower portion has a non-circular cross section, preferbaly an oval shape, e.g. an elliptic cross section or a cross section with two opposite linear sections and two opposite semi-circular sections. Thereby a complete collapse of this lower portion during each pulsation cycle is further predisposed resulting in a vacuum relief to the teat during the collapsed period. This causes the blood which is drawn to the surface of the teat due to the vacuum applied during the milking process to return into the inner parts of the teat tissue.

As usual a milk tube is provided at the lower end portion of the teat cup liner which extends through the lower opening of the teat cup shell. Such milk tube has a plurality of moulded outer rings which permit adjustment and tensioning of the liner within teat cup shells of different length.

The inner diameter of the milk tube should be at least 10 mm for cows and proportionally less for sheep and goats to insure a minimum vacuum fluctuation at the teat end during the fastest milk flow, thus reducing trauma inside the udder cystern and teat canal.

The end of the milk tube is reduced inside to permit stretching over smaller nipples, connecting to the milking claw piece, which normally accomodates four teat cup shells.

The teat cup liner according to the invention can consist of any physiologically compatible elastic material like natural or synthetic rubber, vulcanized or not vulcanized, e.g. NR, SBR, NBR, silicone, PVC, thermoplastic rubber etc. Preferably it consists of NBR or silicone.

If the teat cup liner consists of natural or synthetic rubber the wall thickness of the upper portion should be about 2.5 mm to 5 mm, preferably 3 mm and the wall thickness of the lower portion should be about 0,5 mm to 2 mm, preferably 1 mm.

In the following a preferred embodiment of the invention is now described by way of example with reference to the drawings in which

Figure 1 is a part-sectional view of a liner according to the invention,

Figure 2 is a view of a section taken along line II-II in Figure 1,

Figure 3 is part sectional view of the liner of Figures 1 and 2 inserted in a teat cup shell and attached to a teat with the lower portion of the liner in a collapsed state.

The teat cup liner shown has an upper opening 10 in the top of the teat cup surrounded by a flexible section 17. The diameter of opening 10 should be smaller than the diameter of the teat so that on introduction of the teat through opening 10 section 17 is drawn inwardly and comes into close contact with the teat.

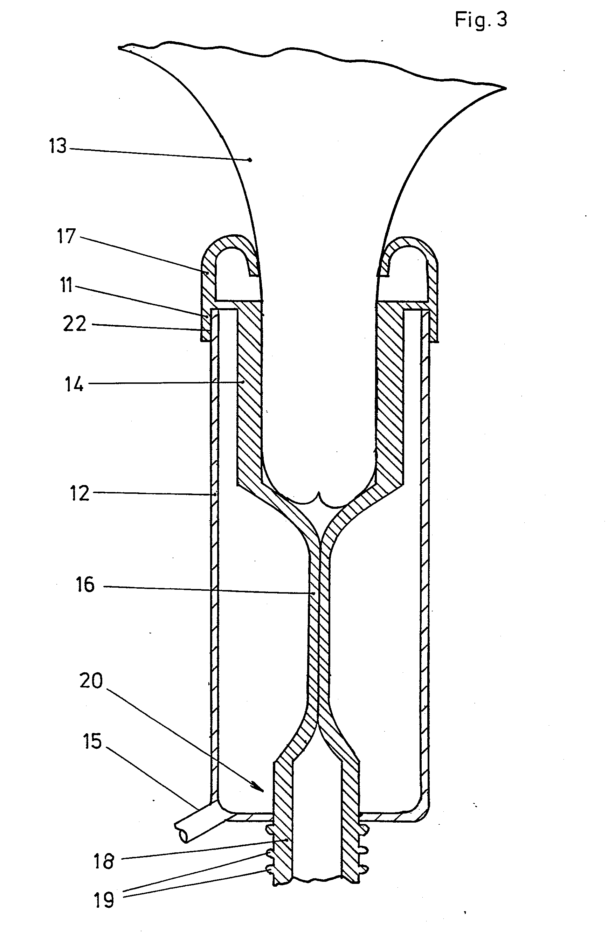

A lip 11 extends downwardly from section 17 of the top of the teat cup and comes into sealing engagement with the outer circumferential surface of the teat cup shell in the vicinity of upper opening 22 in Figure 3. From section 17 an upper tube-like portion 14 extends downwardly and is connected with a lower tube-like portion 16 through a transition portion 23 having a tapered outer surface. As shown upper portion 14 has a larger wall thickness and therefore a larger rigidity than lower portion 16.

At its lower end the liner according to the invention is provided with a milk tube 18 which has an internal diameter of at least 10 mm to insure a fast flow of milk from the cow without causing a detrimental milking vacuum fluctuation on the teat. At the outer surface of the milk tube 18 moulded rings 19 are provided which come in engagement with the lower opening 20 of the teat cup shell 12 to insure correct tension of the liner within such teat cup shell during its lifetime.

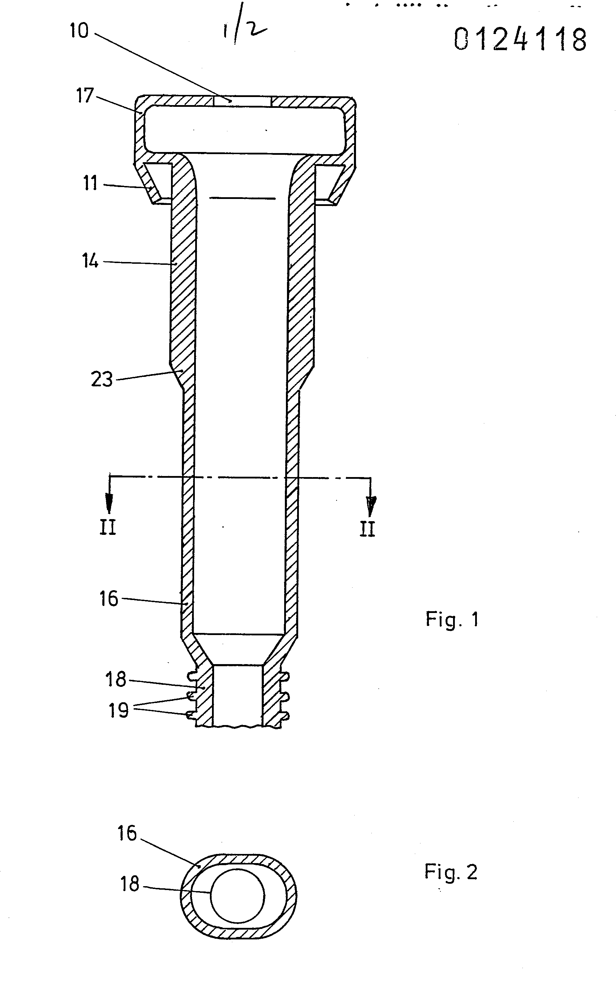

As shown in Figure 2 the lower portion 16 of the teat cup has an oval shaped cross section with two opposite linear sections and two opposite sections of semi-circular shape.

Figure 3 shows the liner incorporated in teat cup shell 12 during the milking process and particularly at vacuum release. The teat 13 has been introduced through opening 10 thereby stretching section 17 inwards in close attachment with its surface thus preventing air leaks at all stages of the milking process without being pressurized. Lip 11 is in engagement with the outer surface of teat cup shell 12 generating a hermetical sealing between the liner and the shell within this section while the inner surface enclosing lower opening 20 of the shell is in close engagement with the milk tube 18 over the moulded rings 19.

As mentioned above Figure 3 shows the pulsation cycle in a stage when the vacuum in the teat cup shell 12 has been released through nipple 15 resulting in a complete collapse of portion 16 but leaving portion 14 and 23 in such a position that they are in close contact with the teat without effecting undue pressure on the same. The liner is thus held affirm in place and prevented from creeping on to the secretory tissue of the udder where this joins the teat and at the same time a rest phase from vacuum on the teat is insured at each pulsation of the liner during milking. This avoids trauma on the sphincter valve at the end of the teat which can cause errosion.

On the other hand during the rest phase sufficient contact of the liner with the teat is insured to massage the blood back into the teat which was drawn to the surface during the

0124118

vacuum or open milking phase. This occurs generally about 40 to 60 times a minute.


ugs/voe/Lsch

0124118

## CLAIMS

1. Teat cup liner for use within a teat cup shell in milking machines for milking animals which teat cup liner comprises an upper portion (14) for engagement with the teat (13) and a lower portion (16) located between said upper portion (14) and the lower opening (20) of the teat cup shell (12), characterized in that said upper portion (14) is not or only slightly collapsible and said lower portion (16) is completely collapsible at vacuum release in the space between the teat cup shell and the teat cup liner during milking.

2. Teat cup liner according to claim 1, characterized in that the wall thickness of said upper portion (14) is larger than the wall thickness of said lower portion (16).

3. Teat cup liner according to claims 1 or 2, characterized in that a tapered portion is provided between said upper portion (14) said lower portion (16).

4. Teat cup liner according to any one of claims 1 to 3, characterized in that said upper portion (14) has a circular cross section and that said lower portion (16) has a non-circular cross section.

5. Teat cup liner according to claim 4, characterized in that said cross section is of oval shape.

6. Teat cup liner according to one of claims 1 to 5, characterized in that it consists of natural or synthetic rubber.

0124118

7. Teat cup liner according to claim 6, characterized in that the rubber is NBR or silicone.

8. Teat cup liner according to claims 6 or 7, characterized in that the wall thickness of said upper portion (14) is 2.5 mm to 5 mm and the wall thickness of said lower portion (16) is 0.5 mm to 2 mm.

0124118

10

17

11

14

23

II                II

16

18

19

Fig. 1

16

18

Fig. 2

Fig. 3

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 289 634 (C.G. SIMONS) * Column 1, line 59 - column 3, line 21; figures 1,2 * | 1-3,6 | A 01 J 5/08 |
| X | DE-B-1 172 078 (D.O. NOORLANDER) * Column 3, lines 8-19; column 6, lines 38-40; figure 7 * | 1,4,5 | |
| A | GB-A-1 400 014 (W.K. HELLER) * Whole document * | 6,7 | |
| A | DE-B-1 036 562 (UTINA-ELEKTROWERK GmbH) | | |

-----

| | | | TECHNICAL FIELDS SEARCHED (Int. Cl. 3) |
|---|---|---|---|
| | | | A 01 J |

The present search report has been drawn up for all claims

| Place of search | Date of completion of the search | Examiner |
|---|---|---|
| THE HAGUE | 02-07-1984 | NEHRDICH H.J |